# FASCICULE DE BREVET EUROPEEN

(11) **EP 1 998 515 B1**
(45) Date de publication et mention de la délivrance du brevet: **17.12.2014**
(21) Numéro de dépôt: 08156891.7
(22) Date de dépôt: 26.05.2008
(51) Int. Cl.: H04W 76/02, H04W 92/02

(54) **Procédés de gestion d'interfonctionnement entre un réseau 3GPP visité disposant de réseaux d'accès 3GPP et WLAN et un réseau 3GPP de domicile pour une station mobile itinérante, et noeud SGSN et passerelle TTG correspondants**
Verfahren zur Verwaltung der Zusammenarbeit zwischen einem angesteuerten 3GPP-Netz, das über 3GPP- und WLAN-Zugangsnetze verfügt, und einem 3GPP-Hausnetz für eine Roaming-Mobilstation sowie entsprechendem SGSN-Knoten und entsprechende TTG-Schnittstelle
Methods for managing interoperation between a visited 3GPP network having a 3GPP and WLAN access network and a home 3GPP network for a roaming mobile station, as well as corresponding SGSN node and TTG gateway

(30) Priorité: 28.05.2007 FR 0755281
(43) Date de publication de la demande: 03.12.2008
(73) Titulaire: Alcatel Lucent, 92100 Boulogne-Billancourt (FR)
(72) Inventeur: Gras, Laurence, 91440 Bures sur Yvette (FR)
(74) Mandataire: El Manouni, Josiane

(56) Documents cités:
- WO-A-2006/000612
- US-A1- 2006 104 262

## Description

L'invention concerne l'interfonctionnement (ou « inter-working ») entre un réseau de communication mobile de domicile de type 3GPP et un réseau de communication mobile visité de type 3GPP, disposant d'un réseau d'accès de type 3GPP et d'un réseau d'accès de type WLAN (« Wireless Local Area Network »), en présence d'une station mobile hybride (3GPP/WLAN) attachée audit réseau 3GPP visité (et donc en situation d'itinérance (ou « roaming ») par rapport audit réseau 3GPP de domicile) et se déplaçant entre les deux réseaux d'accès 3GPP et WLAN.

On entend ici par « réseau d'accès WLAN » tout type de réseau local d'accès disposant d'une interface radio WLAN permettant un accès IP (standards IEEE 802.11, Bluetooth et Hiperlan/2), et notamment les réseaux WiFi et WiMAX.

Par ailleurs, on entend ici par « réseau (de type) 3GPP» tout type de réseau de communication disposant au moins d'une interface radio 3GPP permettant un accès IP (« Internet Protocol »), et notamment les réseaux mobiles (ou cellulaires) dits de deuxième génération (2G), comme par exemple les réseaux GSM, les réseaux mobiles (ou cellulaires) dits 2,5G, comme par exemple les réseaux GPRS/EDGE, et les réseaux mobiles (ou cellulaires) dits de troisième génération (3G), comme par exemple les réseaux UMTS ou CDMA2000, ainsi que toutes leurs variantes.

En outre, on entend ici par « réseau (de type) 3GPP de domicile » (ou « 3GPP home network ») le réseau 3GPP auprès duquel l'utilisateur d'une station mobile hybride (3GPP/WLAN) a contracté un abonnement autorisant l'itinérance, et par « réseau (de type) 3GPP visité » (ou « 3GPP visited network ») un réseau 3GPP qui dispose d'un accord avec un réseau 3GGP de domicile permettant à un utilisateur de connecter sa station mobile à ses réseaux d'accès WLAN et 3GPP lorsqu'il est en situation d'itinérance.

Enfin, on entend ici par « interfonctionnement (3GPP/WLAN) » la possibilité offerte à un réseau d'accès WLAN d'utiliser certaines infrastructures de coeur de réseau 3GPP pour permettre à l'utilisateur d'une station mobile hybride (3GPP/WLAN), connectée à ce réseau d'accès WLAN, d'accéder à des services (ou en anglais « Packet Services ») offerts par son opérateur et/ou par un ou plusieurs fournisseurs d'accès à l'Internet (ou ISP pour « Internet Service Provider »). Cet interfonctionnement est notamment défini par les versions 6 et 7 (« releases 6 and 7 ») du 3GPP (spécifications techniques 3GPP TS 23.234 et TS 23.934).

Comme le sait l'homme de l'art, les versions 6 et 7 de l'interfonctionnement 3GPP/WLAN (et plus précisément son scénario n°3) prévoient qu'une station mobile hybride (3GPP/WLAN) puisse bénéficier des services dits à commutation de paquets (ou PS pour « Packet Switched ») qui sont mis à disposition par son réseau 3GPP de domicile lorsqu'elle est momentanément connectée à un réseau d'accès WLAN d'un réseau 3GPP visité qui est connecté audit réseau 3GPP de domicile (c'est-à-dire en situation d'itinérance).

Un exemple se trouve dans WO 2006/000 612.

Pour ce faire, il a été proposé d'établir une session de communication (impliquant un service) via un équipement du coeur du réseau 3GPP visité, appelé WAG (pour « WLAN Access Gateway »), et un équipement du coeur du réseau 3GPP de domicile, appelé PDG (pour « Packet Data Gateway »), qui est connecté au réseau de services à commutation de paquets qui fournit le service objet de la session à établir.

L'inconvénient principal de ce mode de connexion réside dans le fait qu'il ne permet pas la continuité du service (et donc de la session correspondante) lorsque la station mobile hybride impliquée dans cette session est en situation de mobilité, c'est-à-dire lorsqu'elle quitte le réseau d'accès WLAN d'un réseau 3GPP visité et doit se connecter à un autre réseau d'accès WLAN ou 3GPP de ce réseau 3GPP visité. Dans ce type de situation, la session de communication initiale est interrompue et l'on doit établir une nouvelle session de communication via le nouveau réseau d'accès WLAN ou 3GPP.

En outre, la fonction de sécurité est assurée par l'équipement de type WAG alors qu'il ne peut vérifier que les adresses IP source et de destination et la nature des tunnels de type bout en bout (ou « end-to-end » - IPsec) à établir, ce qui n'est pas satisfaisant principalement parce que cet équipement WAG n'a pas accès au contenu des paquets et donc qu'il ne peut pas faire certaines opérations, comme par exemple la facturation (ou « charging ») locale.

L'invention a donc pour but de proposer une solution qui permet à une station mobile hybride en situation d'itinérance d'établir une session de communication (impliquant un service) via un réseau d'accès WLAN ou 3GPP d'un réseau 3GPP visité, le coeur du réseau 3GPP visité et son réseau 3GPP de domicile, et de maintenir la continuité de service lorsqu'elle est en situation de mobilité entre les deux réseaux d'accès WLAN et 3GPP visités.

Elle propose à cet effet un premier procédé dédié à la gestion de l'interfonctionnement entre un réseau de type 3GPP de domicile et un réseau de type 3GPP visité, disposant d'un réseau d'accès de type 3GPP et d'un réseau d'accès de type WLAN, pour une station mobile hybride en situation d'itinérance par rapport au réseau 3GPP de domicile.

Ce premier procédé se caractérise par le fait qu'il consiste, lorsque la station mobile transmet au réseau local sans fil une demande d'établissement d'une session de communication avec un équipement accessible via un noeud de type GGSN (pour « Gateway GPRS Support Node ») de son réseau 3GPP de domicile :
- à déterminer un identifiant de communication d'une passerelle de terminaison de tunnel (ou TTG pour « Tunnel Termination Gateway ») implantée dans le réseau 3GPP visité, puis
- à établir un tunnel entre le réseau local sans fil et la passerelle de terminaison de tunnel, puis
- à déterminer un identifiant de communication du noeud de type GGSN, et
- à établir un tunnel entre la passerelle de terminaison de tunnel et le noeud de type GGSN.

Le premier procédé selon l'invention peut comporter d'autres caractéristiques qui peuvent être prises séparément ou en combinaison, et notamment :
- avant de déterminer l'identifiant de communication de la passerelle de terminaison de tunnel, on peut sélectionner le réseau 3GPP visité au sein d'une liste obtenue dans le réseau local sans fil ;
- après avoir déterminé l'identifiant de communication de la passerelle de terminaison de tunnel, on peut effectuer une demande d'autorisation d'accès à l'équipement auprès d'un serveur de type AAA (« Authentication, Authorization and Accounting » - authentification, autorisation et comptabilité) du réseau 3GPP de domicile ;
- on peut établir le tunnel entre la passerelle de terminaison de tunnel et le noeud de type GGSN après avoir activé un contexte de type PDP ;
- lorsqu'un noeud de type SGSN (pour « Serving GPRS Support Node ») du réseau 3GPP visité reçoit une notification de mise à jour d'aire de routage émise par la station mobile lors d'une tentative de transfert de la session de communication du réseau d'accès WLAN visité vers le réseau d'accès 3GPP visité, on peut transmettre à la passerelle de terminaison de tunnel un message requérant un contexte SGSN de transfert de la station mobile, puis lorsque le noeud de type SGSN reçoit le contexte SGSN de transfert on peut effectuer une procédure de mise à jour de contexte PDP de service destinée à supprimer et/ou modifier les tunnels établis entre la station mobile et le noeud GGSN, via la passerelle de terminaison de tunnel, et établir de nouveaux tunnels entre la station mobile et le noeud GGSN, via le noeud SGSN, afin d'assurer la continuité du service pendant le transfert de session de communication ;
   ➢ avant d'effectuer la procédure de mise à jour du contexte PDP de service, on peut effectuer des opérations de sécurisation ;
   ➢ le nouveau tunnel établi entre le noeud GGSN et le noeud SGSN peut être de type GTP (pour « GPRS Tunnelling Protocol »).

L'invention propose également un second procédé dédié à la gestion d'un interfonctionnement entre un réseau de type 3GPP de domicile et un réseau de type 3GPP visité, disposant d'un réseau d'accès de type 3GPP et d'un réseau d'accès de type WLAN, pour une station mobile hybride en situation d'itinérance par rapport au réseau 3GPP de domicile et ayant établi une session de communication avec un équipement, accessible via un noeud de type GGSN du réseau 3GPP de domicile, au moyen de tunnels établis avec le noeud de type GGSN via un noeud de type SGSN du réseau 3GPP visité.

Ce second procédé se caractérise par le fait qu'il consiste, lorsqu'une passerelle de terminaison de tunnel implantée dans le réseau 3GPP visité reçoit une notification de mise à jour d'aire de routage émise par la station mobile hybride lors d'une tentative de transfert de la session de communication du réseau d'accès 3GPP visité vers le réseau d'accès WLAN visité,
- à transmettre au noeud de type SGSN un message requérant un contexte SGSN de transfert de la station mobile, puis
- lorsque la passerelle de terminaison de tunnel reçoit le contexte SGSN de transfert, à effectuer une procédure de mise à jour de contexte PDP de service destinée à supprimer et/ou modifier les tunnels établis entre la station mobile et le noeud GGSN via le noeud de type SGSN, et à établir de nouveaux tunnels entre la station mobile et le noeud GGSN, via la passerelle de terminaison de tunnel, afin d'assurer la continuité du service pendant le transfert de session de communication.

Par exemple, avant d'effectuer la procédure de mise à jour du contexte PDP de service, on peut effectuer des opérations de sécurisation.

Par ailleurs, le nouveau tunnel établi entre le noeud GGSN et la passerelle de terminaison de tunnel peut être de type GTP.

L'invention propose également une passerelle de terminaison de tunnel, pour un réseau 3GPP visité disposant d'un réseau d'accès de type 3GPP et d'un réseau d'accès de type WLAN, chargée, lorsqu'elle reçoit une demande d'établissement de tunnel en provenance d'une station mobile hybride (en situation d'itinérance par rapport à un réseau 3GPP de domicile, connectée au réseau d'accès WLAN visité et souhaitant établir une session de communication avec un équipement accessible via un noeud de type GGSN de son réseau 3GPP de domicile), de déterminer un identifiant de communication de ce noeud de type GGSN auprès d'un serveur de type AAA du réseau 3GPP visité, puis d'établir un tunnel avec le noeud de type GGSN identifié (par exemple après avoir activé un contexte de type PDP) et un tunnel avec le terminal mobile via le réseau d'accès WLAN visité.

L'invention propose également une passerelle de terminaison de tunnel (pouvant également et éventuellement comporter les caractéristiques techniques de la plateforme présentée ci-avant), pour un réseau 3GPP visité disposant d'un réseau d'accès de type 3GPP et d'un réseau d'accès de type WLAN, chargée, lorsqu'elle reçoit une notification de mise à jour d'aire de routage émise par une station mobile hybride (en situation d'itinérance par rapport à un réseau 3GPP de domicile) lors d'une tentative de transfert (du réseau d'accès 3GPP visité vers le réseau d'accès WLAN visité, d'une session de communication qu'elle a établie avec un équipement (accessible via un noeud de type GGSN d'un réseau 3GPP de domicile, au moyen de tunnels établis avec le noeud de type GGSN via un noeud de type SGSN du réseau 3GPP visité) :
- de transmettre au noeud de type SGSN un message requérant un contexte SGSN de transfert de la station mobile, puis
- lorsqu'elle reçoit le contexte SGSN de transfert, d'effectuer auprès du noeud GGSN une procédure de mise à jour de contexte PDP de service destinée à supprimer et/ou modifier les tunnels établis entre la station mobile et ce noeud GGSN via le noeud de type SGSN, puis d'établir un nouveau tunnel avec le noeud de type GGSN (par exemple de type GTP) et un nouveau tunnel avec le terminal mobile via le réseau d'accès WLAN visité, afin d'assurer la continuité du service pendant le transfert de session de communication.

Cette passerelle de terminaison de tunnel peut par exemple être chargée d'effectuer des opérations de sécurisation avant d'effectuer la procédure de mise à jour du contexte PDP de service.

L'invention propose également un noeud de type SGSN, pour un réseau 3GPP visité disposant d'un réseau d'accès de type 3GPP et d'un réseau d'accès de type WLAN, chargé, lorsqu'il reçoit une notification de mise à jour d'aire de routage émise par une station mobile hybride (en situation d'itinérance par rapport à un réseau 3GPP de domicile) lors d'une tentative de transfert, du réseau d'accès WLAN visité vers le réseau d'accès 3GPP visité, d'une session de communication qu'elle a établie avec un équipement (accessible via un noeud de type GGSN de son réseau 3GPP de domicile, au moyen de tunnels établis avec le noeud de type GGSN via une passerelle de terminaison de tunnel implantée dans le réseau 3GPP visité) :
- de transmettre à la passerelle de terminaison de tunnel un message requérant un contexte SGSN de transfert de la station mobile, puis
- lorsqu'elle reçoit le contexte SGSN de transfert, d'effectuer une procédure de mise à jour de contexte PDP de service destinée à supprimer et/ou modifier les tunnels établis entre la station mobile et le noeud GGSN, via la passerelle de terminaison de tunnel, puis d'établir un nouveau tunnel avec le noeud de type GGSN (par exemple de type GTP) et un nouveau tunnel avec le terminal mobile via le réseau d'accès 3GPP visité, afin d'assurer la continuité du service pendant le transfert de session de communication.

D'autres caractéristiques et avantages de l'invention apparaîtront à l'examen de la description détaillée ci-après, et des dessins annexés, sur lesquels :

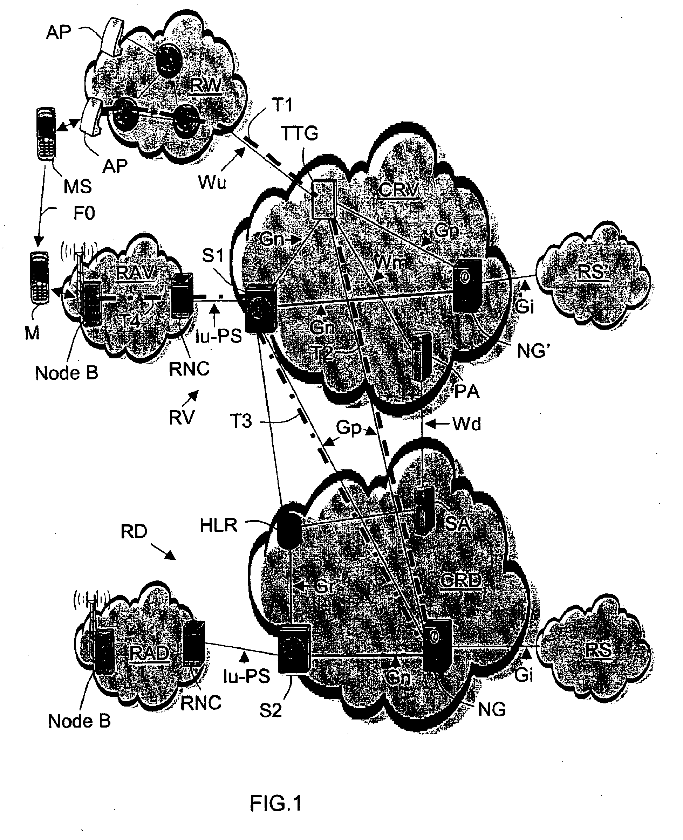

- la figure 1 illustre de façon très schématique et fonctionnelle les principaux équipements de réseau impliqués, d'une part, dans l'établissement d'une session de communication entre une station mobile hybride 3GPP/WLAN et un équipement d'un réseau de services, via un réseau d'accès WLAN d'un réseau 3GPP visité et un réseau 3GPP de domicile connecté audit réseau de services, et d'autre part, lors d'un transfert de cette session du réseau d'accès WLAN visité vers le réseau d'accès 3GPP du réseau 3GPP visité,

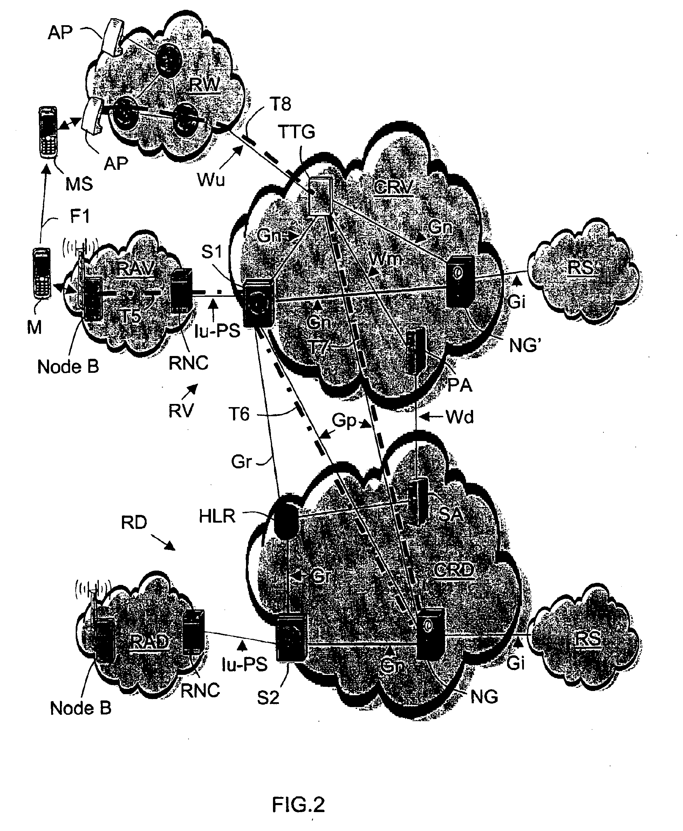

- la figure 2 illustre de façon très schématique et fonctionnelle les principaux équipements de réseau impliqués, d'une part, dans l'établissement d'une session de communication entre une station mobile hybride 3GPP/WLAN et un équipement d'un réseau de services, via un réseau d'accès 3GPP d'un réseau 3GPP visité et un réseau 3GPP de domicile connecté audit réseau de services, et d'autre part, lors d'un transfert de cette session du réseau d'accès 3GPP visité vers un réseau d'accès WLAN du réseau 3GPP visité, et

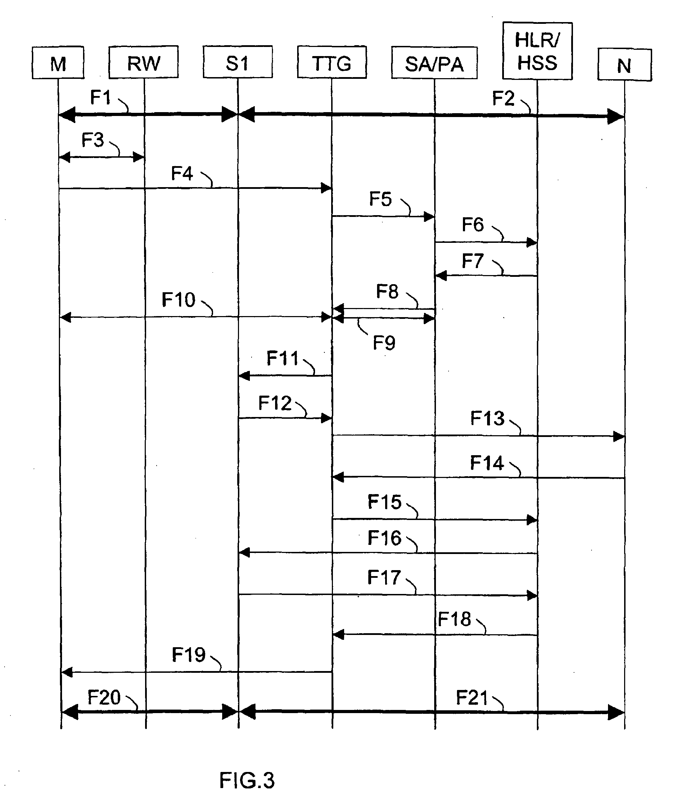

- la figure 3 illustre de façon schématique les principales étapes d'un exemple de procédé de transfert de session de communication selon l'invention du réseau d'accès 3GPP du réseau 3GPP visité de la figure 2 vers le réseau d'accès WLAN de ce dernier.

Les dessins annexés pourront non seulement servir à compléter l'invention, mais aussi contribuer à sa définition, le cas échéant.

L'invention a pour objet de proposer des procédés permettant à une station mobile hybride 3GPP/WLAN, qui est attachée à un réseau 3GPP visité disposant d'un réseau d'accès WLAN et d'un réseau d'accès 3GPP, et donc en situation d'itinérance, d'établir une session de communication (impliquant un service) via ledit réseau 3GPP visité et son réseau 3GPP de domicile, et de maintenir la continuité de service lorsqu'elle se déplace entre les deux réseaux d'accès 3GPP et WLAN visités (c'est-à-dire lorsqu'elle est en situation de mobilité).

Dans ce qui suit, on considère à titre d'exemple illustratif et non limitatif que les réseaux mobiles (ou cellulaires) 3GPP visité et de domicile sont de type UMTS. Mais, l'invention n'est pas limitée à ce type de réseau 3GPP. Elle concerne en effet tous les réseaux de communication disposant d'une interface radio 3GPP permettant un accès IP et notamment les réseaux 2G (par exemple GSM), les réseaux 2,5G (par exemple GPRS/EDGE), et les réseaux 3G (par exemple UMTS ou CDMA2000), ainsi que toutes leurs variantes et leurs équivalents.

Par ailleurs, on considère dans ce qui suit, à titre d'exemple illustratif et non limitatif, que le réseau d'accès WLAN du réseau 3GPP visité est de type WiFi ou WiMAX. Mais, l'invention n'est pas limitée à ce type de réseau d'accès WLAN. Elle concerne en effet tous les réseaux d'accès locaux sans fil disposant d'une interface radio WLAN permettant un accès IP (standards IEEE 802.11, Bluetooth et Hiperlan/2).

Les procédés selon l'invention peuvent être mis en oeuvre au moyen d'une architecture de réseaux du type de celles illustrées sur les figures 1 et 2.

Dans ce type d'architecture le réseau 3GPP visité comprend un coeur de réseau 3GPP CRV couplé à un réseau d'accès 3GPP RAV et un réseau d'accès WLAN RW, et le réseau 3GPP de domicile comprend un coeur de réseau 3GPP CRD couplé à un réseau d'accès 3GPP RAD, au coeur de réseau 3GPP visité CRV et à un réseau (ou ensemble) de services (ou Packet Services) RS offerts par son opérateur et/ou par un ou plusieurs fournisseurs d'accès à l'Internet (ou ISP).

L'utilisateur de la station mobile (hybride) MS a contracté auprès de l'opérateur du réseau 3GPP de domicile RD (RAD et CRD) un abonnement qui l'autorise à se connecter à certains réseaux 3GPP visités (situation d'itinérance ou roaming), disposant d'un réseau d'accès 3GPP et d'un réseau d'accès WLAN RW.

Il est important de noter que l'invention ne concerne que les stations mobiles MS de type hybride 3GPP/WLAN, c'est-à-dire disposant d'une carte de communication (par exemple de type UICC pourvu d'un (U)SIM) leur permettant de se connecter à la fois aux réseaux d'accès WLAN RW et aux réseaux d'accès 3GPP. Il pourra donc s'agir de tout type d'équipement de communication mobile et notamment d'un téléphone mobile, d'un ordinateur portable ou d'un assistant numérique personnel (ou PDA) équipé d'une carte du type précité.

Un procédé selon l'invention est notamment mis en oeuvre chaque fois qu'une station mobile MS en situation d'itinérance souhaite établir une session de communication avec un équipement d'un réseau (ou ensemble) de services RS, par l'intermédiaire d'un réseau d'accès WLAN visité RW, d'un coeur de réseau visité CRV et de son coeur de réseau de domicile CRD, afin d'utiliser un service.

La procédure d'établissement de la session de communication entre la station mobile MS et l'équipement offrant le service requis se déroule conformément aux principales étapes décrites ci-dessous.

Tout d'abord, la station mobile MS transmet au réseau d'accès WLAN visité RW une demande d'établissement d'une session de communication avec l'équipement du réseau de services RS.

Puis, la station mobile MS peut éventuellement sélectionner un coeur de réseau 3GPP visité CRV préféré dans une liste qu'elle obtient dans le réseau d'accès WLAN visité RW et qui contient les identifiants des différents réseaux 3GPP auquel il est connecté. Le réseau d'accès WLAN visité RW fournit alors à la station mobile MS une adresse de communication locale, de type IP. Ensuite, et en option, le réseau d'accès WLAN peut éventuellement demander une authentification de la station mobile MS pour l'accès à un serveur AAA SA, via une interface appelée Wa.

La station mobile MS détermine alors un identifiant de communication (par exemple l'adresse IP) d'une passerelle TTG que l'invention propose d'implanter au sein du réseau 3GPP visité RV (qu'il a éventuellement sélectionné). Pour ce faire, elle effectue une demande dite DNS (pour « Domain Name System ») auprès du réseau d'accès WLAN visité RW. Puis, une fois qu'elle dispose de l'adresse IP de la passerelle TTG, la station mobile MS transmet à cette passerelle TTG (via un point d'accès AP du réseau d'accès WLAN visité RW) une requête d'établissement d'un tunnel bout en bout (ou « end-to-end ») T1, de type « Tunnel Establishment Request » (comportant notamment des champs User-ID et W-APN), conformément aux spécifications techniques 3GPP TS 23.234. Ce tunnel bout en bout T1 est par exemple de type VPN/IPsec.

Puis, le réseau d'accès WLAN effectue préférentiellement une demande d'autorisation d'accès de la station mobile MS à l'équipement du réseau de services RS, par exemple au moyen du protocole EAP (« Extensible Authentication Protocol »).

Pour ce faire, il transmet la demande d'autorisation d'accès, via une interface appelée Wu, à une passerelle de terminaison de tunnel TTG (« Tunnel Termination Gateway ») d'un coeur de réseau 3GPP visité CRV auquel il est couplé et dont il connaît un identifiant de communication, comme par exemple une adresse IP, ainsi qu'éventuellement un numéro (ou identifiant) ISDN. La passerelle de terminaison de tunnel TTG retransmet alors la demande, via une interface appelée Wm, à l'équipement proxy de type AAA PA de son coeur de réseau 3GPP visité CRV, lequel se charge alors de la transmettre, via une interface appelée Wd, à un serveur de type AAA SA du réseau 3GPP de domicile RD.

Si l'utilisateur de la station mobile MS est autorisé à bénéficier des services offerts par l'équipement du réseau de services RS, alors, le serveur de type AAA SA transmet un message d'autorisation au proxy de type AAA PA, qui le retransmet à la passerelle de terminaison de tunnel TTG, lequel se charge alors de le transmettre au réseau d'accès WLAN visité RW.

Une fois que le tunnel T1 a été établi entre la station mobile MS et la passerelle TTG, via l'interface Wu, la passerelle TTG détermine un identifiant de communication (par exemple l'adresse IP) d'un noeud de type GGSN NG du coeur de réseau 3GPP de domicile CRD, qui est connecté au réseau de services RS offrant le service requis. Pour ce faire, la passerelle TTG effectue une demande DNS auprès d'un serveur de noms de son coeur de réseau visité CRV, qui agit en tant qu'équipement proxy DNS. Ce serveur de noms analyse le champ APN de cette demande DNS, et transmet cette dernière à un autre serveur de noms du coeur de réseau 3GPP de domicile CRD.

Cet autre serveur de noms analyse à son tour le champ APN contenu dans cette demande DNS afin de déterminer l'identifiant de communication (par exemple l'adresse IP) du noeud de type GGSN NG concerné. Puis, il transmet cette adresse IP au serveur de noms du coeur de réseau visité CRV, qui se charge alors de la communiquer à la passerelle TTG.

La passerelle TTG établit alors, via une interface appelée Gp, un autre tunnel bout en bout T2 avec le noeud GGSN NG qui fournit l'accès au service objet de la session requise. Cet autre tunnel bout en bout T2 est par exemple de type GTP (pour « GPRS Tunnelling Protocol »). Pour ce faire, la passerelle TTG initie par exemple auprès du noeud GGSN NG une procédure d'activation de contexte PDP (ou « PDP context » - « Packet Data Protocol »), par exemple en utilisant un message de type « Create PDP Context Request » auquel répond le noeud GGSN NG par un message de réponse de type « Create PDP Context Response ».

Une fois que le tunnel bout en bout T2 a été établi entre la passerelle TTG et le noeud GGSN NG, la passerelle TTG en informe la station mobile MS. La session de communication peut alors commencer entre la station mobile MS et l'équipement du réseau de services RS qui offre le service objet de ladite session, via les tunnels T1 et T2.

Le procédé selon l'invention, décrit ci-avant, peut également servir à transférer la session de communication établie, du réseau d'accès WLAN visité RW vers le réseau d'accès 3GPP visité RAV, lorsque la station mobile MS (en situation de mobilité) s'apprête à quitter la zone de couverture du réseau d'accès WLAN visité RW pour pénétrer dans celle du réseau d'accès 3GPP visité RAV. Ce déplacement de la station mobile MS est matérialisé par la flèche F0 sur la figure 1.

Le transfert est initié lorsqu'un noeud de type SGSN (pour « Serving GPRS Support Node ») S1 du coeur de réseau 3GPP visité CRV reçoit de la station mobile MS via le réseau d'accès 3GPP RAV une notification de mise à jour d'aire de routage. Cette notification se présente par exemple sous la forme d'une requête de type « Routing Area (RA) Update » (comportant notamment des champs User-ID et W-APN), conformément aux spécifications techniques 3GPP TS 23.060.

Le noeud SGSN S1 déclenche alors une procédure de demande de transfert de contexte vers la passerelle TTG afin d'établir les connexions vers la station mobile MS et vers le noeud GGSN NG. Pour ce faire, il transmet à la passerelle TTG de son coeur de réseau 3GPP visité CRV, via une interface appelée Gn, un message requérant le contexte SGSN de transfert (ou « SGSN context ») utilisé par la station mobile MS, afin de pouvoir se substituer à la passerelle TTG. Le message de requête contient des informations telles que, notamment, l'identifiant de communication de la station mobile MS.

Le contexte SGSN de transfert qui doit être récupéré contient le contexte PDP de service (ou « PDP context ») ainsi que des éléments de sécurité propres à la station mobile MS concernée. Le contexte PDP de service représente la définition du service en cours. Il comprend notamment l'adresse IP du noeud GGSN NG qui sert de point d'accès à ce service, ainsi qu'éventuellement le numéro (ou identifiant) ISDN dudit noeud GGSN NG.

Par ailleurs, le message requérant le contexte SGSN de transfert est par exemple de type « SGSN Context Request()».

Une fois que le noeud SGSN S1 a reçu de la passerelle TTG le contexte SGSN de transfert requis, il effectue une procédure de mise à jour de contexte PDP de service afin de supprimer et/ou modifier les tunnels T1 et T2 qui ont été précédemment établis entre la station mobile MS et le noeud GGSN NG, via la passerelle TTG. Il est important de noter que cette mise à jour du contexte PDP de service n'entraîne pas la suppression effective du tunnel GTP T2 associé à la session en cours de transfert, mais sa modification. En fait, cela ne fait que remplacer son extrémité côté passerelle TTG par une autre extrémité côté noeud SGSN S1, l'adresse IP du service restant la même. En fait, cela permet notamment de conserver l'adresse IP attribuée au service durant son établissement (elle fait partie du « PDP context ») et de garder ainsi le service ouvert durant le « handover » (transfert), car l'attribution d'une nouvelle adresse IP entraînerait la fermeture du service puis sa réouverture.

On notera qu'avant d'effectuer cette procédure de mise à jour du contexte PDP de service, le noeud SGSN S1 peut éventuellement effectuer des opérations de sécurisation auprès de la station mobile MS et du noeud GGSN NG. Ces opérations de sécurisation consistent par exemple et notamment en des échanges de clefs pour la sécurisation des échanges.

Une fois cette procédure effectuée, le noeud SGSN S1 établit un nouveau tunnel T3 avec le noeud GGSN NG, via l'interface Gp et un nouveau tunnel T4 avec la station mobile MS via une interface appelée lu-PS, permettant ainsi d'assurer la continuité du service pendant le transfert de session de communication. Le nouveau tunnel T3 établi entre le noeud GGSN NG et le noeud SGSN S1 est par exemple de type GTP. Le nouveau tunnel T4 établi entre la station mobile MS et le noeud SGSN S1 est par exemple une connexion spécifique aux réseaux 2G/3G.

L'invention propose également un procédé permettant de transférer, d'un réseau d'accès 3GPP visité RAV vers le réseau d'accès WLAN visité RW, une session de communication qui a été précédemment établie entre une station mobile MS et un équipement d'un réseau de services RS connecté au coeur de réseau 3GPP de domicile CRD, via le réseau d'accès 3GPP visité RAV et le coeur de réseau 3GPP de domicile CRD, lorsque cette station mobile MS (en situation de mobilité) s'apprête à quitter la zone de couverture du réseau d'accès 3GPP visité RAV pour pénétrer dans celle du réseau d'accès WLAN visité RW. Ce déplacement de la station mobile MS est matérialisé par la flèche F1 sur la figure 2.

Il est important de noter que ce procédé ne porte pas sur l'établissement de la session de communication qui est bien connue de l'homme de l'art, mais seulement sur le transfert de la session de communication établie. Il est simplement rappelé, pour comprendre ce qui suit, que la session de communication se fait grâce à un tunnel T5 établi, via l'interface lu-PS, entre la station mobile MS et le noeud SGSN S1 du coeur de réseau 3GPP visité CRV (flèche F1 de la figure 3), et un tunnel T6 établi, via l'interface Gp, entre ce noeud SGSN S1 et un noeud GGSN NG du coeur de réseau 3GPP de domicile CRD, auquel est connecté le réseau de services RS offrant le service objet de la session à transférer (flèche F2 de la figure 3). Le tunnel T6 établi entre le noeud GGSN NG et le noeud SGSN S1 est par exemple de type GTP. Le tunnel T5 établi entre la station mobile MS et le noeud SGSN S1 est par exemple une connexion spécifique aux réseaux 2G/3G.

Le transfert est initié lorsque la station mobile MS s'est connectée au réseau d'accès WLAN visité RW (flèche F3 de la figure 3) et qu'une passerelle TTG du coeur de réseau 3GPP visité CRV reçoit de la station mobile MS, via le réseau d'accès WLAN visité RW (flèche F4 de la figure 3), une requête d'établissement d'un tunnel bout en bout T8, qui fait office de notification de changement de cellule (et donc de mise à jour d'aire de routage). Cette notification se présente par exemple sous la forme d'une requête de type « Tunnel Establishment Request » (comportant notamment des champs User-ID et W-APN), conformément aux spécifications techniques 3GPP TS 23.234.

De préférence, une fois que la passerelle TTG a reçu cette requête, elle effectue des opérations de sécurisation auprès de la station mobile MS et de l'équipement proxy AA PA du coeur de réseau 3GPP visité CRV, qui impliquent également le serveur AAA SA, un serveur de localisation du coeur de réseau 3GPP de domicile CRD, appelé HLR (pour « Home Location Register »), ainsi que généralement le HSS associé du coeur de réseau 3GPP de domicile CRD (flèches F5 à F10 de la figure 3). Ces opérations de sécurisation consistent par exemple et notamment en des échanges de clefs pour la sécurisation des échanges. Une partie au moins d'entre elles (flèches F9 et F10) se fait par exemple au moyen du protocole EAP.

Une fois que les éventuelles opérations de sécurisation ont été effectuées, la passerelle TTG (qui a reçu la requête) transmet (flèche F11 de la figure 3) au noeud SGSN S1 de son coeur de réseau 3GPP visité CRV, via l'interface Gn, un message requérant le contexte SGSN de transfert (ou « SGSN context ») utilisé par la station mobile MS, afin de pouvoir se substituer à ce noeud SGSN S1. Le message de requête contient des informations telles que, notamment, l'identifiant de communication de la station mobile MS.

Le contexte SGSN de transfert qui doit être récupéré contient le contexte PDP de service ainsi que des éléments de sécurité propres à la station mobile MS concernée. Le contexte PDP de service représente la définition du service en cours. Il comprend notamment l'adresse IP du noeud GGSN NG qui sert de point d'accès à ce service, ainsi qu'éventuellement le numéro (ou identifiant) ISDN dudit noeud GGSN NG.

Par ailleurs, le message requérant le contexte SGSN de transfert est par exemple de type « SGSN Context Request() ».

Une fois que la passerelle TTG a reçu du noeud SGSN S1 le contexte SGSN de transfert requis (flèche F12 de la figure 3), il effectue une procédure de mise à jour de contexte PDP de service afin de supprimer et/ou modifier les tunnels T5 et T6 qui ont été précédemment établis entre la station mobile MS et le noeud GGSN NG, via le noeud SGSN S1. Pour ce faire, la passerelle TTG génère par exemple une demande de mise à jour de contexte PDP de service. Cette demande est par exemple de type « Update PDP Context Request()». Elle est destinée à signaler au noeud GGSN NG que la passerelle TTG se substitue au noeud SGSN S1 pour la session de service de la station mobile MS. Elle comprend par conséquent le ou les identifiants de communication de la passerelle TTG, l'identifiant de la station mobile MS ainsi que d'autres informations liées à celle-ci. La demande est transmise, via l'interface Gn, par la passerelle TTG à destination du noeud GGSN NG, identifié par le contexte SGSN de transfert reçu (flèche F13 de la figure 3).

A réception de cette demande, le noeud GGSN NG enregistre les informations qu'elle contient, puis il adresse à destination de la passerelle TTG un message d'accusé de réception (flèche F14 de la figure 3). Il est important de noter que cette mise à jour du contexte PDP de service n'entraîne pas la suppression effective du tunnel GTP T6 associé à la session en cours de transfert, mais sa modification. En fait, cela ne fait que remplacer son extrémité côté noeud SGSN S1 par une autre extrémité côté passerelle TTG, l'adresse IP du service restant la même.

A réception de ce message d'accusé de réception, la passerelle TTG doit alors mettre à jour le serveur de localisation HLR (ainsi qu'éventuellement le HSS) du coeur de réseau 3GPP de domicile CRD. Pour ce faire, il génère par exemple un message de signalisation de substitution du point d'accès de la station mobile MS pour la session en cours de transfert. Ce message est par exemple de type « Update Location() ». Il comprend par conséquent le ou les identifiants de communication de la passerelle TTG et l'identifiant de la station mobile MS. Le message est transmis par la passerelle TTG à destination du serveur de localisation HLR, via le proxy/serveur AAA PA (flèche F15 de la figure 3).

A réception de ce message, le serveur de localisation HLR met à jour sa mémoire ou base de données avec les informations qu'il contient, puis il adresse à destination du noeud SGSN S1, via une interface appelée Gr, un message requérant la libération des ressources radio et la suppression de la connexion (tunnel) T5 établie entre le Node B (station de base), le RNC (contrôleur de station de base) et le noeud SGSN S1 (flèche F16 de la figure 3).

Ce message est par exemple de type « Cancel Location() ». Il comprend par conséquent l'identifiant de la station mobile MS (IMSI) et le type d'annulation (« cancellation type »).

A réception de ce message, le noeud SGSN S1 adresse au serveur de localisation HLR un message d'accusé de réception, via l'interface Gr (flèche F17 de la figure 3), pour lui signaler que la connexion (tunnel) T5 a bien été supprimée. Ce message est par exemple de type « Cancel Loc Ack() ».

A réception de ce message d'accusé de réception le serveur de localisation HLR adresse à destination de la passerelle TTG un message d'accusé de réception, via l'interface Gr (flèche F18 de la figure 3), afin de lui signaler que les mises à jour ont bien été effectuées. Ce message est par exemple de type « Update Location Ack() ».

A réception de ce message d'accusé de réception la passerelle TTG est informée que le nouveau tunnel T7 a été établi entre elle et le noeud GGSN NG. Elle finalise alors l'établissement du nouveau tunnel T8 entre elle et la station mobile MS et en informe cette dernière en lui transmettant, via l'interface Wu, un message de confirmation d'établissement des tunnels T7 et T8 (flèche F19 de la figure 3). Ce message est par exemple de type « Tunnel Establishment Ack () ».

Le nouveau tunnel T7 établi entre le noeud GGSN NG et la passerelle TTG est par exemple de type GTP. Le nouveau tunnel T8 établi entre la station mobile MS et la passerelle TTG est par exemple de type VPN/IPsec.

Grâce à ces deux nouveaux tunnels T8 et T7 (flèches F20 et F21), la continuité du service est donc assurée pour la station mobile MS pendant le transfert de la session de communication du réseau 3GPP visité RV vers le réseau d'accès WLAN visité RW.

Il est important de noter que l'invention permet de mettre à la disposition des utilisateurs itinérants certains services offerts par les réseaux 3GPP qu'ils visitent.

Par ailleurs, l'invention permet de réutiliser l'ossature (ou « backbone ») 3GPP en toute sécurité via le réseau 3GPP visité, de la même façon que dans le cadre de sessions de communication établies dans un réseau 3GPP de domicile en l'absence d'itinérance.

## Revendications

1. Procédé de gestion d'un interfonctionnement entre un réseau de type 3GPP de domicile (RD) et un réseau de type 3GPP visité (RV), disposant d'un réseau d'accès de type 3GPP (RAV) et d'un réseau d'accès de type WLAN (RW), pour une station mobile hybride (MS) en situation d'itinérance par rapport audit réseau 3GPP de domicile (RD), **caractérisé en ce qu'**il consiste, en cas de transmission par ladite station mobile (MS) audit réseau d'accès WLAN visité (RW) d'une demande d'établissement d'une session de communication avec un équipement accessible via un noeud de type GGSN (NG) de son réseau 3GPP de domicile (RD), i) à déterminer un identifiant de communication d'une passerelle de terminaison de tunnel (TTG) implantée dans ledit réseau 3GPP visité (RV), puis ii) à établir un tunnel entre ledit réseau d'accès WLAN visité (RW) et ladite passerelle de terminaison de tunnel (TTG), puis iii) à déterminer un identifiant de communication dudit noeud de type GGSN (NG), et iv) à établir un tunnel entre ladite passerelle de terminaison de tunnel (TTG) et ledit noeud de type GGSN (NG).

2. Procédé selon la revendication 1, **caractérisé en ce qu'**au i) avant de déterminer l'identifiant de communication de la passerelle de terminaison de tunnel (TTG) on sélectionne ledit réseau 3GPP visité (RV) dans une liste obtenue dans ledit réseau d'accès WLAN visité (RW).

3. Procédé selon l'une des revendications 1 et 2, **caractérisé en ce qu'**au i) après avoir déterminé l'identifiant de communication de la passerelle de terminaison de tunnel (TTG) on effectue une demande d'autorisation d'accès audit équipement auprès d'un serveur de type AAA (SA) du réseau 3GPP de domicile (RD).

4. Procédé selon l'une des revendications 1 à 3, **caractérisé en ce qu'**au iv) on établit ledit tunnel après avoir activé un contexte de type PDP.

5. Procédé selon l'une des revendications 1 à 4, **caractérisé en ce qu'**en cas de réception par un noeud de type SGSN (S1) dudit réseau 3GPP visité (RV) d'une notification de mise à jour d'aire de routage émise par ladite station mobile (MS) lors d'une tentative de transfert de ladite session de communication dudit réseau d'accès WLAN (RW) vers le réseau d'accès 3GPP dudit réseau 3GPP visité (RV), on transmet à ladite passerelle de terminaison de tunnel (TTG) un message requérant un contexte SGSN de transfert de ladite station mobile (MS), puis à réception dudit contexte SGSN de transfert par ledit noeud de type SGSN (S1) on effectue une procédure de mise à jour de contexte PDP de service destinée à supprimer et/ou modifier lesdits tunnels établis entre ladite station mobile (MS) et ledit noeud de type GGSN (NG), via ladite passerelle de terminaison de tunnel (TTG), et à établir de nouveaux tunnels entre ladite station mobile (MS) et ledit noeud de type GGSN (NG), via ledit noeud de type SGSN (S1), pour assurer la continuité du service pendant ledit transfert de session de communication.

6. Procédé selon la revendication 5, **caractérisé en ce qu'**avant d'effectuer ladite procédure de mise à jour du contexte PDP de service, on effectue des opérations de sécurisation.

7. Procédé selon l'une des revendications 5 et 6, **caractérisé en ce que** ledit nouveau tunnel établi entre ledit noeud de type GGSN (NG) et ledit noeud de type SGSN (S1) est de type GTP.

8. Procédé de gestion d'un interfonctionnement entre un réseau de type 3GPP de domicile (RD) et un réseau de type 3GPP visité (RV), disposant d'un réseau d'accès de type 3GPP (RAV) et d'un réseau d'accès de type WLAN (RW), pour une station mobile hybride (MS) en situation d'itinérance par rapport audit réseau 3GPP de domicile (RD) et ayant établi une session de communication avec un équipement, accessible via un noeud de type GGSN (NG) dudit réseau 3GPP de domicile (RD), au moyen de tunnels établis avec ledit noeud de type GGSN (NG) via un noeud de type SGSN (S1) dudit réseau 3GPP visité (RV), **caractérisé en ce qu'**il consiste, en cas de réception par une passerelle de terminaison de tunnel (TTG) implantée dans ledit réseau 3GPP visité (RV) d'une notification de mise à jour d'aire de routage émise par ladite station mobile hybride (MS) lors d'une tentative de transfert de ladite session de communication du réseau d'accès 3GPP visité (RAV) vers ledit réseau d'accès WLAN visité (RW), i) à transmettre audit noeud de type SGSN (S1) un message requérant un contexte SGSN de transfert de ladite station mobile (MS), puis ii) à réception dudit contexte SGSN de transfert par ladite passerelle de terminaison de tunnel (TTG), à effectuer une procédure de mise à jour de contexte PDP de service destinée à supprimer et/ou modifier lesdits tunnels établis entre ladite station mobile (MS) et ledit noeud de type GGSN (NG) via ledit noeud de type SGSN (S1), et à établir de nouveaux tunnels entre ladite station mobile (MS) et ledit noeud de type GGSN (NG), via ladite passerelle de terminaison de tunnel (TTG), pour assurer la continuité du service pendant ledit transfert de session de communication.

9. Procédé selon la revendication 8, **caractérisé en ce qu'**avant de requérir ledit contexte SGSN de transfert on effectue des opérations de sécurisation.

10. Procédé selon l'une des revendications 8 et 9, **caractérisé en ce que** ledit nouveau tunnel établi entre ledit noeud de type GGSN (NG) et ladite passerelle de terminaison de tunnel (TTG) est de type GTP.

11. Passerelle de terminaison de tunnel (TTG) pour un réseau de type 3GPP visité (RV) disposant d'un réseau d'accès de type 3GPP (RAV) et d'un réseau d'accès de type WLAN (RW), **caractérisée en ce qu'**elle est agencée, en cas de réception d'une demande d'établissement de tunnel en provenance d'une station mobile hybride (MS) en situation d'itinérance par rapport à un réseau de type 3GPP de domicile (RD), connectée audit réseau d'accès WLAN visité (RW) et souhaitant établir une session de communication avec un équipement accessible via un noeud de type GGSN (NG) dudit réseau 3GPP de domicile (RD), pour déterminer un identifiant de communication dudit noeud de type GGSN (NG) auprès d'un serveur de type AAA (PA) dudit réseau 3GPP visité (RV), puis pour établir un tunnel avec ledit noeud de type GGSN (NG) identifié et un tunnel avec ladite station mobile (MS) via ledit réseau d'accès WLAN visité (RW).

12. Passerelle de terminaison de tunnel selon la revendication 11, **caractérisée en ce qu'**elle est agencée pour établir ledit tunnel avec ledit noeud de type GGSN (NG) après avoir activé un contexte de type PDP.

13. Passerelle de terminaison de tunnel (TTG) pour un réseau de type 3GPP visité (RV) disposant d'un réseau d'accès de type 3GPP (RAV) et d'un réseau d'accès de type WLAN (RW), **caractérisée en ce qu'**elle est agencée, en cas de réception d'une notification de mise à jour d'aire de routage émise par une station mobile hybride (MS), en situation d'itinérance par rapport à un réseau de type 3GPP de domicile (RD), lors d'une tentative de transfert, dudit réseau d'accès 3GPP visité (RAV) vers ledit réseau d'accès WLAN (RW), d'une session de communication qu'elle a établie avec un équipement, accessible via un noeud de type GGSN (NG) dudit réseau 3GPP de domicile (RD), au moyen de tunnels établis avec ledit noeud de type GGSN (NG) via un noeud de type SGSN (S1) dudit réseau 3GPP visité (RV), i) pour transmettre audit noeud de type SGSN (S1) un message requérant un contexte SGSN de transfert de ladite station mobile (MS), puis ii) à réception dudit contexte SGSN de transfert, pour effectuer auprès dudit noeud de type GGSN (NG) une procédure de mise à jour de contexte PDP de service destinée à supprimer et/ou modifier lesdits tunnels établis entre ladite station mobile (MS) et ledit noeud de type GGSN (NG) via ledit noeud de type SGSN (S1), puis pour établir un nouveau tunnel avec ledit noeud de type GGSN (NG) et un nouveau tunnel avec ledit terminal mobile (MS) via ledit réseau d'accès WLAN visité (RW), pour assurer la continuité du service pendant ledit transfert de session de communication.

14. Passerelle de terminaison de tunnel selon la revendication 13, **caractérisée en ce qu'**elle est agencée pour effectuer des opérations de sécurisation avant de requérir ledit contexte SGSN de transfert.

15. Passerelle de terminaison de tunnel selon l'une des revendications 13 et 14, **caractérisée en ce qu'**elle est agencée pour établir un nouveau tunnel de type GTP avec ledit noeud de type GGSN (NG).

16. Noeud de type SGSN (S1) pour un réseau de type 3GPP visité (RV) disposant d'un réseau d'accès de type 3GPP (RAV) et d'un réseau d'accès de type WLAN (RW), **caractérisé en ce qu'**il est agencé, en cas de réception d'une notification de mise à jour d'aire de routage émise par une station mobile (MS), en situation d'itinérance par rapport à un réseau de type 3GPP de domicile (RD), lors d'une tentative de transfert, dudit réseau d'accès WLAN visité (RW) vers ledit réseau d'accès 3GPP visité (RV), d'une session de communication qu'elle a établie avec un équipement, accessible via un noeud de type GGSN (NG) dudit réseau 3GPP de domicile (RD), au moyen de tunnels établis avec ledit noeud de type GGSN (NG) via une passerelle de terminaison de tunnel (TTG) implantée dans ledit réseau 3GPP visité (RV), i) pour transmettre à ladite passerelle de terminaison de tunnel (TTG) un message requérant un contexte SGSN de transfert de ladite station mobile (MS), puis ii) à réception dudit contexte SGSN de transfert, pour effectuer une procédure de mise à jour de contexte PDP de service destinée à supprimer et/ou modifier lesdits tunnels établis entre ladite station mobile (MS) et ledit noeud de type GGSN (NG), via ladite passerelle de terminaison de tunnel (TTG), puis pour établir un nouveau tunnel avec ledit noeud de type GGSN (NG) et un nouveau tunnel avec ladite station mobile (MS) via le réseau d'accès 3GPP visité (RAV), pour assurer la continuité du service pendant ledit transfert de session de communication.

17. Noeud de type SGSN selon la revendication 16, **caractérisé en ce qu'**il est agencé pour établir un nouveau tunnel de type GTP avec ledit noeud de type GGSN (NG).

## Patentansprüche

1. Verfahren zur Verwaltung einer Verknüpfung zwischen einem Heimnetzwerk (RD) vom Typ 3GPP und einem besuchten Netzwerk (RV) vom Typ 3GPP, welches über ein Zugangsnetzwerk vom Typ 3GPP (RAV) und ein Zugangsnetzwerk vom Typ WLAN (RW) verfügt, für eine hybride Mobilstation (MS), welche sich gegenüber dem besagten 3GPP-Heimnetzwerk (RD) in einer Roaming-Situation befindet, **dadurch gekennzeichnet, dass** es darin besteht, im Fall der Übertragung, durch die besagte Mobilstation (MS), einer Anforderung für den Aufbau einer Kommunikationssitzung mit einem über einen Knoten vom Typ GGSN (NG) ihres 3GPP-Heimnetzwerks (RD) zugänglichen Gerät an das besagte besuchte WLAN-Zugangsnetzwerk (RW) i) eine Kommunikationskennung eines in dem besagten besuchten 3GPP-Netzwerk (RV) angeordneten Tunnelabschluss-Gateways (TTG) zu ermitteln, anschließend ii) einen Tunnel zwischen dem besagten besuchten WLAN-Zugangsnetzwerk (RW) und dem besagten Tunnelabschluss-Gateway (TTG) aufzubauen, und dann (iii) eine Kommunikationskennung des besagten Knotens vom Typ GGSN (NG) zu ermitteln und iv) einen Tunnel zwischen dem besagten Tunnelabschluss-Gateway (TTG) und dem besagten Knoten vom Typ GGSN (NG) aufzubauen.

2. Verfahren nach Anspruch 1, **dadurch gekennzeichnet, dass** man in Schritt i) vor der Ermittlung der Kommunikationskennung des Tunnelabschluss-Gateways (TTG) das besagte besuchte 3GPP-Netzwerk (RV) in einer in dem besagten besuchten WLAN-Zugangsnetzwerk (RW) erhaltenen Liste auswählt.

3. Verfahren nach einem der Ansprüche 1 und 2, **dadurch gekennzeichnet, dass** man in Schritt i) nach Ermittlung der Kommunikationskennung des Tunnelabschluss-Gateways (TTG) eine Anforderung für die Zugangsberechtigung zu dem besagten Gerät an einen Server vom Typ AAA (SA) des 3GPP-Heimnetzwerks (RD) stellt.

4. Verfahren nach einem der Ansprüche 1 bis 3, **dadurch gekennzeichnet, dass** man in Schritt iv) den besagten Tunnel nach Aktivieren eines Kontextes vom Typ PDP aufbaut.

5. Verfahren nach einem der Ansprüche 1 bis 4, **dadurch gekennzeichnet, dass** man im Fall des Empfangs, an einem Knoten vom Typ SGSN (S1) des besagten besuchten 3GPP-Netzwerks (RV), einer von der besagten Mobilstation (MS) während eines Versuchs der Übergabe der besagten Kommunikationssitzung von dem besagten WLAN-Zugangsnetzwerk (RW) an das 3GPP-Zugangsnetzwerk des besagten besuchten 3GPP-Netzwerks (RV) ausgegebenen Benachrichtigung über die Aktualisierung des Routing-Bereichs eine Nachricht, welche einen SGSN-Kontext für die Übergabe der besagten Mobilstation (MS) anfordert, an das besagte Tunnelabschluss-Gateway (TTG) überträgt, und dass man nach Empfang des besagten SGSN-Übergabekontextes an dem besagten Knoten vom Typ SGSN (S1) eine Prozedur zur Aktualisierung des PDP-Dienstkontextes durchführt, welche dazu bestimmt ist, die besagten zwischen der besagten Mobilstation (MS) und dem besagten Knoten vom Typ GGSN (NG) über das besagte Tunnelabschluss-Gateway (TTG) aufgebauten Tunnel abzubauen und/oder zu ändern und neue Tunnel zwischen der besagten Mobilstation (MS) und dem besagten Knoten vom Typ GGSN (NG) über den besagten Knoten vom Typ SGSN (S1) aufzubauen, um die Kontinuität des Dienstes während der besagten Übergabe der Kommunikationssitzung zu gewährleisten.

6. Verfahren nach Anspruch 5, **dadurch gekennzeichnet, dass** man vor Durchführen der besagten Prozedur zur Aktualisierung des PDP-Dienstkontextes Sicherungsoperationen vornimmt.

7. Verfahren nach einem der Ansprüche 5 und 6, **dadurch gekennzeichnet, dass** der besagte zwischen dem besagten Knoten vom Typ GGSN (NG) und dem besagten Knoten vom Typ SGSN (S1) aufgebaute neue Tunnel vom Typ GTP ist.

8. Verfahren zur Verwaltung einer Verknüpfung zwischen einem Heimnetzwerk (RD) vom Typ 3GPP und einem besuchten Netzwerk (RV) vom Typ 3GPP, welches über ein Zugangsnetzwerk vom Typ 3GPP (RAV) und ein Zugangsnetzwerk vom Typ WLAN (RW) verfügt, für eine hybride Mobilstation (MS), welche sich gegenüber dem besagten 3GPP-Heimnetzwerk (RD) in einer Roaming-Situation befindet und eine Kommunikationsverbindung mit einem Gerät, welches über einen Knoten vom Typ GGSN (NG) des besagten 3GPP-Heimnetzwerks (RD) zugängig ist, anhand von mit dem besagten Knoten vom Typ GGSN (NG) über einen Knoten vom Typ SGSN (S1) des besagten besuchten 3GPP-Netzwerks aufgebauten Tunneln aufgebaut hat, **dadurch gekennzeichnet, dass** es darin besteht, im Fall des Empfangs, an einem in dem besagten besuchten 3GPP-Netzwerk (RV) angeordneten Tunnelabschluss-Gateway (TTG), einer von der besagten hybriden Mobilstation (MS) während eines Versuchs der Übergabe der besagten Kommunikationssitzung von dem besuchten 3GPP-Zugangsnetzwerk (RAV) an das besagte besuchte WLAN-Zugangsnetzwerk (RW) ausgegebenen Benachrichtigung über die Aktualisierung des Routing-Bereichs i) eine Nachricht, welche einen SGSN-Kontext für die Übergabe der besagten Mobilstation (MS) an den besagten Knoten vom Typ SGSN (S1) zu übertragen und anschließend ii) nach Empfang des besagten SGSN-Übergabekontextes an dem besagten Tunnelabschluss-Gateway (TTG) eine Prozedur zur Aktualisierung des PDP-Dienstkontextes durchführt, welche dazu bestimmt ist, die besagten zwischen der besagten Mobilstation (MS) und dem besagten Knoten vom Typ GGSN (NG) über den besagten Knoten vom Typ SGSN (S1) aufgebauten Tunnel abzubauen und/oder zu ändern und neue Tunnel zwischen der besagten Mobilstation (MS) und dem besagten Knoten vom Typ GGSN (NG) über das besagte Tunnelabschluss-Gateway (TTG) aufzubauen, um die Kontinuität des Dienstes während der besagten Übergabe der Kommunikationssitzung zu gewährleisten.

9. Verfahren nach Anspruch 8, **dadurch gekennzeichnet, dass** man vor Anfordern des besagten SGSN-Übergabekontextes Sicherungsoperationen vornimmt.

10. Verfahren nach einem der Ansprüche 8 und 9, **dadurch gekennzeichnet, dass** der besagte zwischen dem besagten Knoten vom Typ GGSN (NG) und dem besagten Tunnelabschluss-Gateway (TTG) aufgebaute neue Tunnel vom Typ GTP ist.

11. Tunnelabschluss-Gateway (TTG) für ein besuchtes Netzwerk (RV) vom Typ 3GPP, welches über ein Zugangsnetzwerk vom Typ 3GPP (RAV) und ein Zugangsnetzwerk vom Typ WLAN (RW) verfügt, **dadurch gekennzeichnet, dass** es dazu ausgelegt ist, im Fall des Empfangs einer Anforderung für den Aufbau eines Tunnels von einer hybriden Mobilstation (MS), welche sich gegenüber einem Heimnetzwerk vom Typ 3GPP (RD) in einer Roaming-Situation befindet, mit dem besagten besuchten WLAN-Netzwerk (RW) verbunden ist und den Aufbau einer Kommunikationssitzung mit einem über einen Knoten vom Typ GGSN (NG) des besagten 3GPP-Heimnetzwerks (RD) zugängigen Gerät wünscht, eine Kommunikationskennung des besagten Knotens vom Typ GGSN (NG) bei einem Server vom Typ AAA (PA) des besagten besuchten 3GPP-Netzwerks (RV) zu ermitteln und anschließend einen Tunnel mit dem besagten identifizierten Knoten vom Typ GGSN (NG) und einen Tunnel mit dem besagten mobilen station (MS) über das besagte besuchte WLAN-Zugangsnetzwerk (RW) aufzubauen.

12. Tunnelabschluss-Gateway nach Anspruch 11, **dadurch gekennzeichnet, dass** es für den Aufbau des besagten Tunnels mit dem besagten Knoten vom Typ GGSN (NG) nach Aktivieren eines Kontextes vom Typ PDP ausgelegt ist.

13. Tunnelabschluss-Gateway (TTG) für ein besuchtes Netzwerk (RV) vom Typ 3GPP, welches über ein Zugangsnetzwerk vom Typ 3GPP (RAV) und ein Zugangsnetzwerk vom Typ WLAN (RW) verfügt, **dadurch gekennzeichnet, dass** es dazu ausgelegt ist, im Fall des Empfangs einer von einer hybriden Mobilstation (MS), welche sich gegenüber einem Heimnetzwerk (RD) vom Typ 3GPP in einer Roaming-Situation befindet, während eines Versuchs der Übergabe, von dem besagten besuchten 3GPP-Zugangsnetzwerk (RAV) an das besagte WLAN-Zugangsnetzwerk (RW), einer Kommunikationssitzung, welche sie mit einem über einen Knoten vom Typ GGSN (NG) des besagten 3GPP-Heimnetzwerks (RD) zugängigen Gerät anhand von zwischen dem besagten Knoten vom Typ GGSN (NG) über einen Knoten vom Typ SGSN (S1) des besagten besuchten 3GPP-Netzwerks (RV) aufgebauten Tunneln aufgebaut hat, ausgegebenen Benachrichtigung über die Aktualisierung des Routing-Bereichs i) eine Nachricht, welche einen SGSN-Kontext für die Übergabe der besagten Mobilstation (MS) anfordert, an den besagten Knoten vom Typ SGSN (S1) zu übertragen, anschließend ii) bei Empfang des besagten SGSN-Übergabekontextes, bei dem besagten Knoten vom Typ GGSN (NG) eine Prozedur für die Aktualisierung des PDP-Dienstkontextes durchzuführen, welche dazu bestimmt ist, die besagten zwischen der besagten Mobilstation (MS) und dem besagten Knoten vom Typ GGSN (NG) über den besagten Knoten vom Typ SGSN (S1) aufgebauten Tunnel abzubauen und/oder zu ändern, und danach einen neuen Tunnel mit dem besagten mobilen Endgerät (MS) über das besagte besuchte WLAN-Zugangsnetzwerk (RW) aufzubauen, um die Kontinuität des Dienstes während der besagten Übergabe der Kommunikationssitzung zu gewährleisten.

14. Tunnelabschluss-Gateway nach Anspruch 13, **dadurch gekennzeichnet, dass** es für das Durchführen von Sicherungsoperation vor Anforderung des besagten SGSN-Übergabekontextes ausgelegt ist.

15. Tunnelabschluss-Gatevway nach einem der Ansprüche 13 und 14, **dadurch gekennzeichnet, dass** es für den Aufbau eines neuen Tunnels vom Typ GTP mit dem besagten Knoten vom Typ GGSN (NG) ausgelegt ist.

16. Knoten vom Typ SGSN (S1) für ein besuchtes Netzwerk (RV) vom Typ 3GPP, welches über ein Zugangsnetzwerk vom Typ 3GPP (RAV) und ein Zugangsnetzwerk vom Typ WLAN (RW) verfügt, **dadurch gekennzeichnet, dass** er dazu ausgelegt ist, im Fall des Empfangs einer von einer Mobilstation (MS), welche sich gegenüber einem Heimnetzwerk (RD) vom Typ 3GPP in einer Roaming-Situation befindet, während eines Versuchs der Übergabe, von dem besagten besuchten WLAN-Zugangsnetzwerk (RW) an das besagte besuchte 3GPP-Zugangsnetzwerk (RV), einer Kommunikationssitzung, welche sie mit einem über einen Knoten vom Typ GGSN (NG des besagten 3GPP-Heimnetzwerks (RD) zugängigen Gerät anhand von zwischen dem besagten Knoten vom Typ GGSN (NG) über ein in dem besagten besuchten 3GPP-Netzwerk (RV) angeordnetes Tunnelabschluss-Gateway (TTG) aufgebauten Tunneln aufgebaut hat, ausgegebenen Benachrichtigung über die Aktualisierung des Routing-Bereichs i) eine Nachricht, welche einen SGSN-Kontext für die Übergabe der besagten Mobilstation (MS) anfordert, an das besagte Tunnelabschluss-Gateway (TTG) zu übertragen, anschließend ii) bei Empfang des besagten SGSN-Übergabekontextes eine Prozedur für die Aktualisierung des PDP-Dienstkontextes durchzuführen, welche dazu bestimmt ist, die besagten zwischen der besagten Mobilstation (MS) und dem besagten Knoten vom Typ GGSN (NG) über das besagte Tunnelabschluss-Gateway (TTG) aufgebauten Tunnel abzubauen und/oder zu ändern, und danach einen neuen Tunnel mit dem besagten Knoten vom Typ GGSN (NG) und einen neuen Tunnel mit dem besagten mobilen station (MS) über das besagte besuchte 3GPP-Zugangsnetzwerk (RAV) aufzubauen, um die Kontinuität des Dienstes während der besagten Übergabe der Kommunikationssitzung zu gewährleisten

17. Knoten vom Typ SGSN nach Anspruch 16, **dadurch gekennzeichnet, dass** er für den Aufbau eines neuen Tunnels vom Typ GTP mit dem besagten Knoten vom Typ GGSN (NG) ausgelegt ist.

## Claims

1. A method for managing an interoperation between a home 3GPP network (RD) and a visited 3GPP network (RV), having a 3GPP access network (RAV) and a WLAN access network (RW), for a hybrid mobile station (MS) roaming with respect to said home 3GPP network (RD), **characterized in that** it consists, in the event that said mobile station (MS) transmits to said visited WLAN access network (RW) a request to establish a communication session with a piece of equipment accessible via a GGSN node (NG) of its home 3GPP network (RD), of i) determining a communication identifier of a tunnel termination gateway (TTG) located within said visited 3GPP network (RV), then ii) establishing a tunnel between said visited WLAN access network (RW) and said tunnel termination gateway (TTG), then iii) determining a communication identifier of said GGSN node (NG), and iv) establishing a tunnel between said tunnel termination gateway (TTG) and said GGSN node (NG).

2. A method according to claim 1, **characterized in that** in i) before determining the communication identifier of the tunnel termination gateway (TTG), said visited 3GPP network (RV) is selected from a list obtained within said visited WLAN access network (RW).

3. A method according to one of the claims 1 and 2, **characterized in that** in i) after having determined the communication identifier of the tunnel termination gateway (TTG) a request to authorize access to said equipment is placed to an AAA server (SA) of the home 3GPP network (RD).

4. A method according to one of the claims 1 to 3, **characterized in that** in iv) said tunnel is established after having activated a PDP context.

5. A method according to one of the claims 1 to 4, **characterized in that** in the event that a SGSN node (S1) of said visited 3GPP network (RV) receives a routing area update notification sent by said mobile station (MS) during an attempt to transfer said communication session from said WLAN access network (RW) to the 3GPP access network of said visited 3GPP network (RV), a message is transmitted to said tunnel termination gateway (TTG) requesting an SGSN transfer context from said mobile station (MS), then upon the receipt of said SGSN transfer context by said SGSN node (SI) a service PDP context update procedure is conducted intended to delete and/or edit said tunnels established between said mobile station (MS) and said GGSN node (NG), via said tunnel termination gateway (TTG), and of establishing new tunnels between said mobile station (MS) and said GGSN node (NG), via said SGSN node (S1), in order to ensure the continuity of service during said communication session transfer.

6. A method according to claim 5, **characterized in that** before conducting said service PDP context update procedure, security-enhancing operations are conducted.

7. A method according to one of the claims 5 and 6, **characterized in that** said new tunnel established between said GGSN node (NG) and said SGSN node (S1) is a GTP tunnel.

8. A method for managing an interconnection between a home 3GPP network (RD) and a visited 3GPP network (RV) which has a 3GPP access network (RAV) and a WLAN access network (RW), for a hybrid mobile station (MS) that is roaming relative to said home 3GPP network (RD) that established a communication session with a piece of equipment, accessible via a GGSN node (NG) of said home 3GPP network (RD), by means of tunnels established with said GGSN node (NG) via an SGSN node (SI) of said visited 3GPP network (RV), **characterized in that** it consists, in the event that a tunnel termination gateway (TTG) located within said visited 3GPP network (RV) receives a routing area update notification sent by said mobile station (MS) during an attempt to transfer said communication session from said WLAN access network (RW) to the 3GPP access network of said visited 3GPP network (RV), of i) transmitting a message to said tunnel termination gateway (TTG) requesting an SGSN transfer context from said mobile station (MS), then ii) upon the receipt of said SGSN transfer context by said tunnel termination gateway (TTG), conducting a service PDP context update procedure intended to delete and/or edit said tunnels established between said mobile station (MS) and said GGSN node (NG) via said SGSN node (SI), and of establishing new tunnels between said mobile station (MS) and said GGSN node (NG), via said tunnel termination gateway (TTG), in order to ensure the continuity of service during said communication session transfer.

9. A method according to claim 8, **characterized in that** before requesting said SGSN transfer context, security-enhancing operations are conducted.

10. A method according to one of the claims 8 and 9, **characterized in that** said tunnel established between said GGSN node (NG) and said tunnel termination gateway (TTG) is a GTP tunnel.

11. A tunnel termination gateway (TTG) for a visited 3GPP network (RV) having a 3GPP access network (RAV) and a WLAN access network (RW), **characterized in that** it is operative, when it receives a request to establish a tunnel coming from a hybrid mobile station (MS) roaming with respect to said home 3GPP network (RD), connected to said visited WLAN access network (RW), and seeking to establish a communication system with a piece of equipment accessible via a GGSN node (NG) of said home 3GPP network (RD), to determine a communication identifier of said GGSN node (NG) from an AAA server (PA) of said visited 3GPP network (RV), then to establish a tunnel with said identified GGSN node (NG) and a tunnel with said mobile station (MS) via said visited WLAN access network (RW).

12. A tunnel termination gateway according to claim 11, **characterized in that** it is operative to establish said tunnel with said GGSN node (NG) after having activated a PDP context.

13. A tunnel termination gateway (TTG) for a visited 3GPP network (RV) having a 3GPP access network (RAV) and a WLAN access network (RW), **characterized in that** it is operative, when it receives a request to establish a tunnel coming from a hybrid mobile station (MS) roaming with respect to a home 3GPP network (RD), during an attempt to transfer, from said visited 3GPP network (RV) to said WLAN access network (RW), a communication session that it had previously established with a piece of equipment accessible via a GGSN node (NG) of said home 3GPP network (RD), by means of tunnels established with said GGSN node (NG) via an SGSN node (S1) of said visited 3GPP network (RV), i) to transmit a message to said SGSN node (S1) requesting an SGSN transfer context from said mobile station (MS), then ii) upon the receipt of said SGSN transfer context, to conduct a service PDP context update procedure with said GGSN node (NG) intended to delete and/or edit said tunnels established between said mobile station (MS) and said GGSN node (NG) via said SGSN node (SI), then to establish a new tunnel with said GGSN node (NG) and a new tunnel with said mobile station (MS) via said visited WLAN access network (RW), in order to ensure the continuity of service during said communication session transfer.

14. A tunnel termination gateway according to claim 13, **characterized in that** it is operative to conduct security-enhancing operations before requesting said SGSN transfer context.

15. A tunnel termination gateway according to one of the claims 13 and 14, **characterized in that** it is operative to establish a new GTP tunnel with said GGSN node (NG).

16. An SGSN node (S1) for a visited 3GPP network (RV) having a 3GPP access network (RAV) and a WLAN access network (RW), **characterized in that** it is operative, when it receives a routing area update notification sent by a mobile station (MS) roaming with respect to a home 3GPP network (RD), during an attempt to transfer, from said visited WLAN network (RW) to said visited 3GPP access network (RV), a communication session that it had previously established with a piece of equipment accessible via a GGSN node (NG) of said home 3GPP network (RD), by means of tunnels established with said GGSN node (NG) via a tunnel termination gateway (TTG) located within said visited 3GPP network (RV), i) to transmit a message to said tunnel termination gateway (TTG) requesting an SGSN transfer context from said mobile station (MS), then ii) upon the receipt of said SGSN transfer context, to conduct a service PDP context update procedure intended to delete and/or edit said tunnels established between said mobile station (MS) and said GGSN node (NG) via said tunnel termination gateway (TTG), then of establishing a new tunnel with said GGSN node (NG) and a new tunnel with said mobile station (MS) via said visited 3GPP network (RV), in order to ensure the continuity of service during said communication session transfer.

17. An SGSN node according to claim 16, **characterized in that** it is operative to establish a new GTP tunnel with said GGSN node (NG).
